# EUROPEAN PATENT APPLICATION

(11) **EP 4 628 558 A1**
(43) Date of publication of application: **08.10.2025**
(21) Application number: 23895610.6
(22) Date of filing: 26.09.2023
(51) Int. Cl.: C09J 123/26, C09J 127/22, C08J 11/26

(54) **POLYETHYLENE TEREPHTHALATE-BASED ADHESIVE REPAIR PATCH FOR ANTI-CORROSIVE COATINGS, METHOD FOR PRODUCING SAME AND USE THEREOF**

(30) Priority: 02.12.2022 BR 102022024689
(71) Applicant: Petroleo Brasileiro S.A. - PETROBRAS, 20031-912 Rio de Janeiro (BR); Universidade Federal De Minas Gerais - UFMG, 31270-901 Belo Horizonte - MG (BR)
(72) Inventor: ROSARIO, Teresa Cristina Alves Villano, ILHA DO FUNDÃO, RJ Rio de Janeiro (BR); VILLALOBOS, Pedro Ricchini, Bonfim, SP Paulínea (BR); BRAGA, Jorgimara De Oliveira, Pampulha, MG Belo Horizonte (BR); DA CUNHA, Fernando Reis, ILHA DO FUNDÃO, RJ Rio de Janeiro (BR); COTTING, Fernando, Pampulha, MG Belo Horizonte (BR)
(74) Representative: Clarke, Modet y Cía., S.L.
(86) International application number: PCT/BR2023/050324
(87) International publication number: WO 2024/113031

(57) **Abstract**

The present invention relates to the process of obtaining an anti-corrosive repair adhesive from discarded **PET** bottles and through the phase inversion technique through the complete precipitation of recycled PET. Said film may be used as an adhesive and may be applied to any painted or unpainted metal surface, without surface preparation, which eliminates the need for steps in the painting process and makes the process disclosed in the present invention less costly. Said repair adhesive is easy to apply, simply by removing the liner and applying it to the structure, without requiring specialized labor, and has a minimum durability of 2 years, and may or may not be removed for maintenance painting. Once removed, the **PET** adhesive comes off easily in the conventional hydro-jetting process.

## Description

### FIELD OF THE INVENTION

The present invention is part of the field of chemical engineering, more precisely in the area of materials and metallurgy, and describes an anti-corrosive repair based on recycled thermoplastic material, such as polyethylene terephthalate (PET), for temporary protection against corrosion of damaged painting systems, wherein said repair can be applied in liquid or solid form, as an adhesive.

### BACKGROUND OF THE INVENTION

Carbon steel, due to its versatile mechanical properties and availability, is one of the most widely used materials in the world. Therefore, as this metal is susceptible to corrosion under common conditions of use, such as when exposed to an atmosphere with humidity and pollutants, its wear is a topic of important analysis. Within the oil industry, for example, corrosion is present in various parts of the process, such as production, transportation, storage and refining, generating costs of billions of dollars. Since, in addition to the costs, accidents in petrochemical industries can be catastrophic, both in terms of loss of life and environmental impact, the importance of inhibiting corrosion in these industries becomes clear.

Among these corrosion inhibition methods, the use of organic coatings is one of the most widely used in the industry, as it has a relatively low cost and performs well in preventing corrosion. These coatings act by forming a barrier between the environment and the element to be protected, preventing aggressive agents from coming into contact with the metal and initiating wear mechanisms. To achieve this, the barrier formed must be impermeable to these agents, in order to effectively guarantee this isolation.

However, it is common to observe a degraded coating before its scheduled preventive maintenance, and in these cases, an intervention must be carried out so that the protection is restored in the region. For this intervention to be efficient in protecting against corrosion, good surface preparation and the use of appropriate chemical products are necessary, in addition to good technical training of the intervener. Therefore, in order to ensure the integrity of the structure again, it can be seen that this step can be costly, as it depends on quality inputs, qualified labor and time.

Regardless of the repair process adopted, the maintenance team must do an excellent job, as both protection systems require a surface free of oils, greases, oxides, salts, among other contaminants and, in the case of polymeric systems, the anchoring of the film is highly influenced by the roughness profile of the substrate.

These particularities of each system make the repair process costly, since in addition to the various steps that influence the total execution time, it is necessary to hire a prepared and qualified execution team, so that the applied repair system shows its best performance. However, in practice this is not what happens, since the difficult access to damaged areas, added to operational errors, leads to the premature degradation of the applied repair material, thus compromising the entire painting system and the integrity of the metal structure.

Currently, high-performance painting systems receive corrective maintenance with a sequence of several steps, which is time-consuming and costly. Additionally, despite being a recyclable material, in 2015, 240 thousand tons of polyethylene terephthalate were improperly discarded, highlighting the need to find new uses for this material to avoid environmental problems. PET has good requirements for use as an anti-corrosive coating, since it has low permeability to gases and water and good chemical resistance.

Given the scenario outlined above, the need for better use of discarded PET is undeniable and, in this sense, the present invention provides multiple benefits by developing a repair system based on polyethylene terephthalate obtained from post-consumer material for painted structures. Said material acts as an anti-corrosive and is applied to the damaged area as a coating, has a low cost of obtaining and helps the environment by promoting the recycling of discarded PET.

### STATE OF THE ART

Some documents from the state of the art describe anti-corrosive repairs based on recycled polyethylene terephthalate for corrosion protection of painting systems, as indicated below.

Patent document BRPI 0404257-3 entitled *"PROCESSO DE OBTENÇÃO ADESIVOS POLIURETANICOS E ADESIVOS POLIURETANICOS ASSIM OBTIDOS"* (PROCESS FOR OBTAINING POLYURETHANE ADHESIVES AND POLYURETHANE ADHESIVES THUS OBTAINED) refers to polyurethane adhesives and polyester polyols obtained by chemical recycling processes of PET material with a reduction in the number of steps and the use of a greater amount of recycled PET in the preparation of polyols used in the production of polyurethanes.

However, said patent document uses the glycolysis polymerization process, which consists of reducing the molar mass of PET using a glycol, which results in the formation of polyesters; this entire step is called chemical recycling. It should be noted that the present invention, when compared with said document, does not use any method for decomposing packaging made from PET to produce by-products. On the contrary, the present invention consists of dissolving post-consumer PET, after it has been reduced in the form of flakes (mechanical process). Said document chemically recycles PET to use only some of its by-products (polyols, polyesters) and then react them with isocyanates to produce a polyurethane glue (adhesive part of the tapes). Therefore, the objective of said document is to produce the adhesive part of an adhesive tape, while the model disclosed in the present invention represents the support for this glue, that is, they are completely different products. Additionally, the present invention uses all the chemical substances present in the composition of the PET packaging.

The scientific document entitled "POLY(ETHYLENE TEREPHTHALATE) PHASE INVERSION MEMBRANES: THERMODYNAMICS AND EFFECTS OF A POOR SOLVENT ON THE MEMBRANE CHARACTERISTICS" refers to PET as a worldwide established polymer used for the manufacture of membranes. Said document prepares PET membranes using the phase inversion technique and characterizes the phase separation phenomena, as well as the performance of membranes produced under different solution conditions.

However, the work developed by said document aimed to produce membranes originating from virgin PET, for application in separation processes. The process used by the present invention shows differences that result in different products in relation to that disclosed by said document.

The product synthesized by said document aims to produce membranes and, for this purpose, it is necessary that the material used is porous, which does not apply to the proposed patent, since an anti-corrosive barrier must be free of pores.

Thus, to circumvent the problem of porosity, the present invention, before using the phase inversion technique in the non-solvent solution (distilled water), carries out the precipitation process in ambient air for 30 minutes.

After the precipitation of PET, on the glassy surface, the phase inversion process was carried out in distilled water. When the PET solution is immersed in water without carrying out precipitation in air, as proposed by said document, a porous membrane is produced, according to figure 1, a product quite different from that obtained by the present invention.

Furthermore, the present invention addresses the need to neutralize the PET film after the phase inversion process, thus removing any trace of residual acid from the production process.

Another important factor, a point of differentiation between the present invention and said document, is the addition of dibutyl phthalate in the range of 10% to 30% (v/v) in relation to the volume of the PET solution. Furthermore, the surprising use of the addition of a plasticizer in the PET solution to produce films with high flexibility stands out. The use of the addition of a plasticizer in the present invention aims to correct problems such as high rigidity and low flexibility of the film, since this is an essential characteristic for the manufacture of adhesive PET so as not to limit its application only to surfaces with flat geometry.

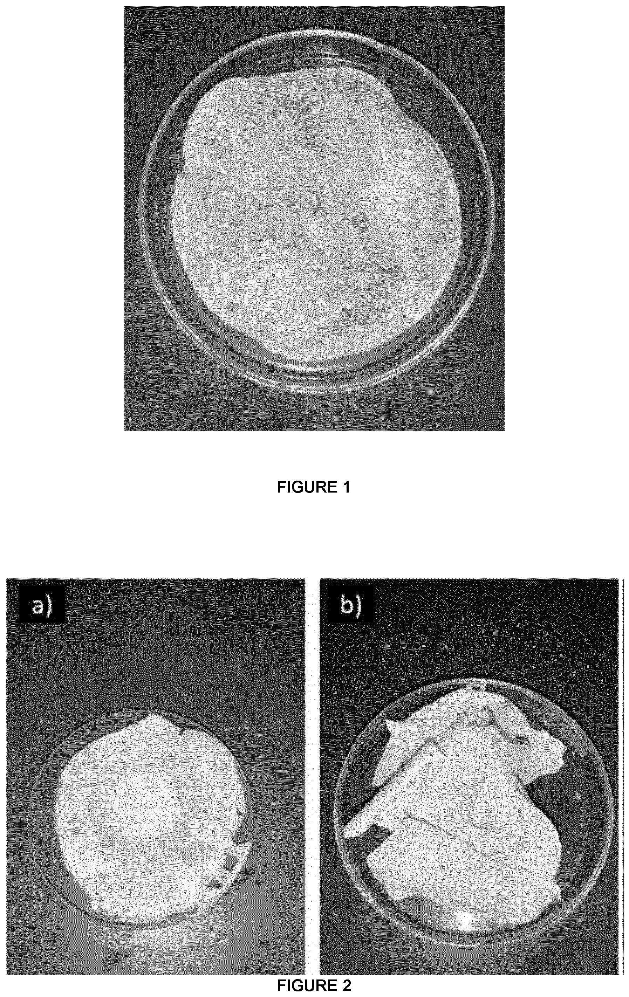

It should be noted that without the addition of the plasticizer, the film becomes brittle within a few hours, which makes its application impossible, as shown in Figure 2.

The scientific document entitled "PLASTICIZER EFFECTS ON PHYSICAL-MECHANICAL PROPERTIES OF SOLVENT CAST SOLUPLUS^{®} FILMS" refers, in particular, to the characterization of the mechanical properties of Soluplus^{®} with four different plasticizers. The selected plasticizers were polyethylene glycol 6, triethyl citrate, propylene glycol and glycerin; they were studied at three different levels (15%, 20% and 25% w/w). The results demonstrated that these four plasticizers are capable of reducing the glass transition temperature, tensile strength and modulus of Young while increasing the percentage elongation and toughness of the film. Among the plasticizers tested, polyethylene glycol 6 showed the greatest change in the mechanical properties studied.

However, said document adds different plasticizers to a polymer that does not belong to the terephthalate class. It is noteworthy that the use of plasticizers is widespread in the literature among polymers that undergo thermomechanical processing, as they improve the physical and mechanical properties of the final product due to the decrease in the glass transition temperature (Tg). In this case, the study is not producing a material from the modification of this polymer by the addition of plasticizers, only verifying the effect of this addition on the physical and mechanical properties of the polymer under study. Furthermore, this study carried out by said document is not comparable to that proposed by the present invention, as the focus is not on modifying the physical and mechanical properties of post-consumer PET; in fact, the aim is to completely solubilize this material to form the film and subsequently apply it as a support for the adhesive. In short, the present invention and said document could only be compared if they disclosed the modification of the structure of post-consumer PET through the addition of plasticizer and then evaluated its properties; however, the present invention produces a new product from post-consumer PET.

The scientific documents entitled (A) "PROPERTIES OF POST-CONSUMER POLYETHYLENE TEREPHTHALATE COATING MECHANICALLY DEPOSITED ON MILD STEELS" and (B) "PRODUCTION AND CHARACTERIZATION OF THERMALLY SPRAYED POLYETHYLENE TEREPHTHALATE COATINGS" refer, respectively, to a post-consumer PET anti-corrosive coating applied to carbon steel by means of an industrial press and thermally sprayed polymer (PET) coatings applied by low-speed flame spray technology to 1020 steel as protection against corrosion and wear.

However, these documents involve direct deposition of micronized PET powder onto the surface of the steel, using thermal spraying and pressing techniques, respectively. In none of the studies was post-consumer PET dissolved in organic reagents to produce a solution, nor did they produce an adhesive film.

Document (B) processes PET using ball mill equipment and with the aid of a subsonic combustion torch-type spraying device, which operates under high pressure conditions. Therefore, it was by this method that the PET powder was deposited onto the surface of the low carbon steel. Additionally, the substrate on which the film was deposited required preheating for better adhesion of the PET powder. In short, this is an expensive and time-consuming process for applying a coating. In its turn, document (A) deposits the micronized post-consumer PET powder on the surface of low carbon steel. However, the production of the PET powder undergoes heat treatment prior to the grinding process, and its deposition on the substrate occurs through the pressing process. Regarding the pressing process, it can be said that the PET powder was placed on top of the steel and then hot pressed (T = 260 °C) on the surface, allowing the film to adhere to the surface.

After elucidating the two processes, it is possible to see that none of the techniques used by said documents have similarities with the technique proposed by the present invention.

The scientific document entitled "RECYCLING WASTE POLYESTER VIA MODIFICATION WITH A RENEWABLE FATTY ACID FOR ENHANCED PROCESSABILITY" refers to the use of a renewable TOFA fatty acid as a modifier for recycled PET. For this purpose, PET was compounded with TOFA at different concentrations and extruded at 240 °C. The characterization shows shifts in the melting and recrystallization temperatures of PET to lower temperatures and depression of the glass transition temperature from 91 to 65 °C. The addition of TOFA also creates imperfections in the crystalline phase that slows down recrystallization, an important processing parameter. Changes in the morphology of plasticized PET reduce and stabilize viscosity. These results suggest a potential path for the reuse of PET waste as high-performance polymeric fibers.

However, said document aims to replace aggressive additives that are used in the production process of packaging made from PET, mainly in the forming stage (to reduce the extrusion temperature, for example). Thus, said document identified the fatty acid TOFA as a potential renewable plasticizer for post-industrial PET resin, thus, its formability could be achieved at lower temperatures. Furthermore, said document seeks to make changes to the composition of the raw material, in this case PET, which is not the scope of the present invention.

The objective of the present invention is to produce an adhesive made from post-use bottles, while the objective of said document is to lower the melting temperature of PET so that temperatures above 260 °C are not necessary in the recycling process, for example.

The document entitled "WHAT IS THE BEST ADHESIVE FOR BONDING PVC PLASTIC?" refers to PET as a thermoplastic material of the polyester family. PET is a lightweight, strong and inert material that is easily transported and recyclable. PET is extremely versatile and can be used in food and beverage packaging, for the manufacture of disposable medical devices and industrial films and wraps.

However, said document is a newsletter from a British chemical company, one of whose segments works in the production and sale of adhesives. The newsletter in question shows some of the properties of PET and its applications, which are numerous. However, said newsletter only directs the consumer to the importance of surface preparation when attaching PET parts and which glues could be used, among those produced by the supplier in question.

Therefore, no similarities were found between the newsletter and the present invention, since the process of reusing PET bottles without significant loss of their properties and with an anti-corrosive application is not addressed.

### SUMMARY OF THE INVENTION

The present invention aims to propose, firstly, a process for producing an anti-corrosive repair adhesive based on recycled PET for the temporary protection of damaged painting systems.

In a second embodiment, the present invention refers to the adhesive films as obtained by said process. Said films show good ductility and flexibility and, additionally, have characteristics such as low permeability to water and gases and good chemical resistance.

Finally, in a third embodiment, the present invention proposes the use of said adhesive film as an anti-corrosive repair system for painted structures, so as to be applied to the site as a coating that forms a barrier between the environment and the element to be protected, preventing aggressive agents from coming into contact with the metal and initiating wear mechanisms.

### BRIEF DESCRIPTION OF THE FIGURES

In order to obtain a full and complete visualization of the objective of this invention, the Figures to which references are made are indicated, as follows.
Figure 1 illustrates an example of a porous membrane, which cannot be used for anti-corrosive purposes.
Figure 2 illustrates, in (a) a PET film with the formulation not adjusted immediately after its production; in (b) a PET film with the formulation not adjusted after a few hours on the bench is illustrated, becoming brittle.
Figure 3 illustrates the application of acrylic glue to the PET film to produce the adhesive.
Figure 4 illustrates in (a) a PET solution after its preparation and in (b) a PET solution applied to stainless steel.
Figure 5 illustrates in (a) a PET adhesive; in (b) a PET adhesive being detached from the liner; in (c) the low carbon steel substrate with PET adhesive; and in (d) a PET adhesive applied to the steel surface.
Figure 6 illustrates the flowchart of all stages of the PET adhesive production process.

### DETAILED DESCRIPTION OF THE INVENTION

The present invention relates, in a first embodiment, to the process of obtaining an anti-corrosive adhesive based on recycled thermoplastic material for the temporary protection of damaged painting systems.

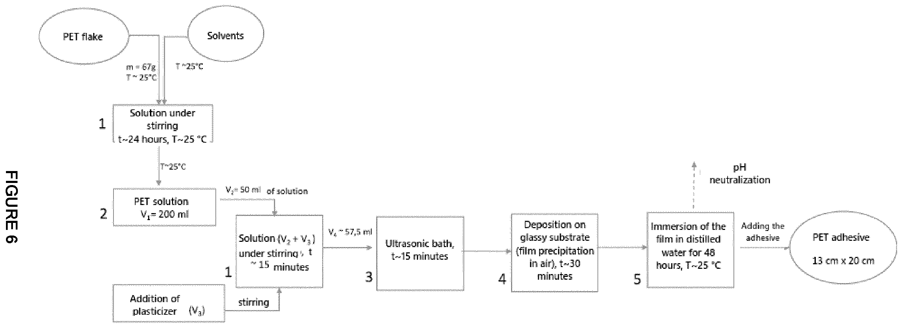

Said process comprises the following steps, as shown in the flowchart in Figure 6:
I. sanitizing the recycled thermoplastic material with water, soap and a sodium hypochlorite disinfectant solution at a concentration between 0.1% and 2.5%;
II. cutting said recycled thermoplastic material into flakes with dimensions that may vary from 0.5 cm X 0.5 cm to 3.0 cm x 3.0 cm each;
III. dissolving the flakes in a proportion of 15% to 35% (m/v) in a solution containing a strong carboxylic acid and an organic solvent in the range of 5/95 (% v/v) to 95/5 (% v/v) acid/solvent to produce a film;
IV. stirring the solution obtained in (III) until complete dissolution, at room temperature;
V. adding a plasticizer, slowly, in concentrations ranging from 10 to 50% (v/v);
VI. dissolving all the plasticizer until a mixture is formed;
VII. subjecting the mixture to an ultrasonic bath for 5 to 15 minutes;
VIII. placing the mixture in (VII) on a glassy plate and leave this system to stand in atmospheric air for a period of between 30 and 90 minutes;
IX. waiting for the partial precipitation of the thermoplastic material;
X. performing the phase inversion technique by submerging the glassy plate in a non-solvent bath of distilled water; and,
XI. applying a layer of permanent tack glue using an extender and protecting it with a silicone-treated paper liner.

The repair adhesive can optionally be obtained from any recycled thermoplastic material selected from the group consisting of: poly(propylene), poly(ethylene), poly(vinyl chloride), poly(urethanes), poly(styrene), poly(ethylene vinyl acetate) and poly(methyl methacrylate), preferably poly(ethylene terephthalate).

The dissolution of the thermoplastic material can be carried out in different proportions of strong carboxylic acid and solvent, that is, from 5/95 (% v/v) to 95/5 (% v/v). The strong carboxylic acid can be selected from trichloroacetic acid, 1,1,1,3,3,3-hexafluoro-2-propanol (HIFP), with trifluoroacetic acid (TFA) being preferably used. The organic solvent can be selected from acetone, toluene, xylene, phenol and carbon tetrachloride, with dichloromethane (DCM) being preferably used. Additionally, the proportion between the thermoplastic material, preferably **PET,** and the strong carboxylic acid solution and solvent can vary from 10/90 (m/v%) to 40/60 (m/v%).

Additionally, different classes of plasticizers can alternatively be used for polymer synthesis, among the options are:
- adipic acid derivatives (di-n-hexyl adipate (DHA), heptyl nonyl adipate (79A), di-2-ethylhexyl adipate (DOA), diisodecyl adipate (DIDA), diisononyl adipate (DINA);
- azelaic acid derivative (Di-2-ethylhexyl azelate (DOZ);
- benzoic acid derivatives (diethylene glycol dibenzoate, dipropylene glycol dibenzoate, 2,2,4-trimethyl-1,3-pentanediolisobutyrate benzoate);
- citric acid derivatives (tri-n-butyl citrate, acetyl citrate tri-n-butyl);
- epoxy derivatives (epoxidized soybean oil (ESO), epoxidized linseed oil (ELO), 2-ethylhexyl epoxy thalate);
- glycol derivatives (diethylene glycol dipellargonate, triethylene glycol di-2-di-2-methylbutyrate);
- hydrocarbons (hydrogenated terphenyls, chlorinated paraffin (52% by weight CI);
- softallic acid derivatives (di-2-ethylhexyl isophthalate);
- oleic acid derivatives (butyl oleate);
- phosphoric acid derivatives (tri-2-ethylhexyl phosphate (TOP), triphenyl phosphate (TPP), tricresyl phosphate (TCP), 2-ethylhexyl diphenyl phosphate, isodecyl diphenyl phosphate);
- phthalic acid derivatives (dimethyl phthalate (DMP), diethyl phthalate (DEP), dibutyl phthalate (DBP), butyl octyl phthalate (BOP), diisohexyl phthalate (DHP), diisoheptyl phthalate (DIHP), heptyl nonyl phthalate (79P), heptyl nonyl undecyl phthalate (711P), dlysooctyl phthalate (DIOP), dl-2-ethylhexyl phthalate (DOP), (n-hexyl, octyl, decyl) phthalate (610), (n-octyl, decyl) phthalate (81 OP), diisodecyl phthalate (DIDP), diundecyl phthalate (DUP), dltridecyl phthalate (DTDP), butyl benzyl phthalate (BBP), alkyl benzyl phthalate, santicizer^{®}261);
- ricinoleic acid derivatives (methyl ricinoleate, n-butyl acetylricinoleate, castor oil);
- sebacic acid derivatives (di-2-ethylhexyl sebacate (DOS));
- stearic acid derivatives (n-butyl stearate);
- sucrose derivatives (sucrose acetate isobutyrate (SAIB));
- sulfonic acid derivatives ((o,p)-toluenesulfonamide, N-ethyl-(o,p)-toluenesulfonamide, phenol alkylsulfonic acid ester and creosol (Mesamoll^{®}));
- terephthalic acid derivatives (bis(2-ethylhexyl) terephthalate (DOTP);
- trimellitic acid derivatives (tris(2-ethylhexyl) trimelllate (TOTM), heptyl nonyl trimelllate (79TM), triisononyl trimelllate (TINTM));
- polyesters such as: adipic acid polyester (mol wt 6000), Paraplex^{®}G-40, adipic acid polyester (mol wt 2000), Santiclzer^{®}334F, azeiaic acid polyester (mol wt 2200), Platolein^{©}9720, sebacic acid polyester (mol wt 8000), Paraplex^{®}G-25); and,
- terpenes and derivatives (camphor, hydrogenated methyl ester of rosin).

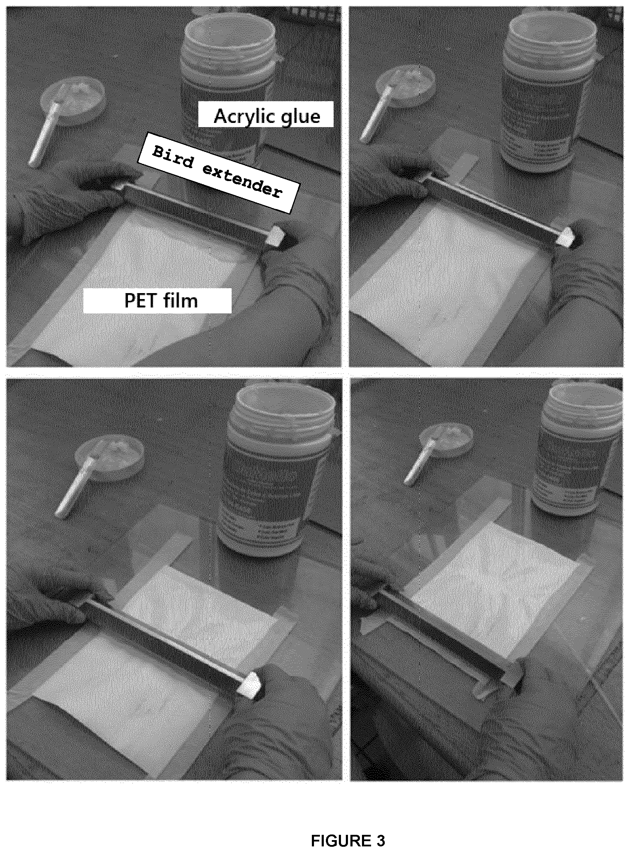

The glue used in the adhesive layer can be produced from a formulation based on elastomers, such as: natural, butyl, nitrile and styrene-butadiene rubbers, acrylates or silicone. The acrylic glue is applied to the adhesive film using a Bird type extender. This device ensures uniform application and controlled thickness of the glue to the adhesive film. Figure 3 shows how a Bird extender works when applying glue to the adhesive film. After applying the acrylic glue, the liner is applied, which acts as a protection for the glue and ensures that the glue maintains its characteristics until the moment of use.

Thus, in a second embodiment, the present invention describes the repair adhesives obtained. The adhesives are obtained as a repair system for painted structures, so that they can be applied to the site as a coating that forms a barrier between the environment and the element to be protected, preventing aggressive agents from coming into contact with the metal and initiating wear mechanisms. To this end, the barrier formed is impermeable to these agents, which ensures effective insulation.

These adhesives are ductile and flexible, with low permeability to water and gases and good chemical resistance, making them suitable for use as anti-corrosive coatings. The adhesives show low film porosity, as seen by scanning electron microscopy (SEM) and water absorption tests. In addition, they have good thermal stability up to 150 °C and do not show chemical degradation in PET after dissolution in TFA, as confirmed by the Fourier transform infrared (FTIR) bands.

It is worth noting that adhesive films are relatively inexpensive to obtain and perform well in preventing corrosion, with a minimum durability of 2 years.

Finally, in a third embodiment, the present invention proposes the use of said adhesives as anti-corrosive repairs.

The anti-corrosive repair obtained can be applied to any metal surface, painted or not, in onshore and offshore areas. The present invention proposes application in liquid form, as a spray, or in solid form, in the form of adhesive tape.

For application in liquid form, it is only necessary to deposit the dissolved thermoplastic material solution on the metal surface and wait approximately 15 minutes for a polymeric film to form. Thus, the liquid application of the solution consists of the direct application of the solution composed of thermoplastic material dissolved in a strong carboxylic acid and an organic solvent.

Thus, this solution is a base solution for the production of a varnish, which can be applied to different substrates by spraying (for example, using a paint gun) or with the aid of a brush. Furthermore, it is possible to use the solution as a gel, from the addition of thickeners, which can be applied to the surface with the aid of the brush.

The solid application consists of the production of said adhesive and its direct application to metal substrates, following the process as described in the present invention with the addition of the glue layer and silicone paper liner to protect the adhesive. It is worth noting that the function of the liner, which is a treated paper, is to guarantee the self-adhesive property of the adhesive in addition to protecting it against contamination.

The removal of the **PET** adhesive can be done manually or by abrasive blasting, for example, by hydroblasting or blasting with metal oxides.

In order to demonstrate its potential, the present invention will be described in more detail in terms of implemented examples. It should be noted that the following description is only intended to clarify the understanding of the proposed invention and to disclose, in more detail, the implementation of the invention without limiting it to the same. Thus, variables similar to the example are also within the scope of the invention.

### Examples of implementation based on PET

In this example, to obtain the support material based on polyethylene terephthalate for anti-corrosive coatings, post-consumer PET bottles were sanitized with water, soap and a 0.1% sodium hypochlorite disinfectant solution. After sanitizing the bottles, the bottom and top of each bottle were removed.

The cut bottles were additionally chopped into flakes with approximate dimensions of 1 cm X 1 cm. Then, 15 g of this PET were dissolved in a solution containing trifluoroacetic acid (TFA) and dichloromethane (DCM) in the proportions of 50/50 (% v/v) of TFA/DCM to produce a PET film.

This solution was left under stirring for 24 hours at room temperature. Subsequently, the plasticizer dibutyl phthalate was slowly added at a concentration of 20% (v/v). After the plasticizer was completely dissolved, the mixture was subjected to an ultrasonic bath for 15 minutes to eliminate bubbles that affect the structure of the repair support material.

The solution was then deposited on a glassy plate and the system was left to rest in atmospheric air for 30 minutes to partially precipitate the PET contained in the solution. After the resting time, the phase inversion technique was performed to produce a film through the complete precipitation of the PET. The phase inversion technique consists of submerging the glassy plate containing the PET solution in a non-solvent bath, for example, in distilled water.

It should be noted that the precipitation of the polymer in solution occurs more quickly when immersion is performed immediately after its deposition on the substrate. Performing the polymer precipitation in two stages requires more time for the evaporation of the organic solvents (trifluoroacetic acid and dichloromethane) to occur in a controlled manner during the resting time. This evaporation stage in air must be carried out in an environment with an exhaust fan, as it involves the evaporation of toxic acid that is harmful to human health.

The function of the plasticizer is to modify the polymer matrix, in this case the PET matrix, so that its small molecules are incorporated between its chains, producing separation between them, breaking the intermolecular bonds. In this way, the film produced from this material becomes more ductile and flexible.

A layer of acrylic-based glue with permanent tack was applied to the surface of the PET film using an extender and protected with a silicone-treated paper liner.

The glue used as an adhesive is an acrylic-styrene copolymer composed of acrylic acid monomers and styrene monomers, a product that can be found commercially, for example. The acrylic glue is applied to the film using a Bird extender. This device ensures uniform application and controlled thickness of the glue on the PET film. Figure 3 shows how a Bird extender works when applying glue to the PET film. After applying the acrylic glue, a liner is applied, which acts as a protection for the glue and ensures that the glue maintains its characteristics until the moment of use.

The liquid application of the PET solution consists of the direct application of the solution composed of PET dissolved in trifluoroacetic acid and dichloromethane. A solution containing 20% (m/m) PET dissolved in 50% (v/v) dichloromethane (DCM) and 50% (v/v) trifluoroacetic acid (TFA) can be used. It is important to note that this solution does not contain tackifying resin, plasticizer or glue in its composition. This solution is a base solution for the production of varnish, which can be applied to different substrates by spraying with a paint gun or with the aid of a brush on the metal surface to form a polymeric film after 5 minutes. It can also be used as a gel to be applied to the surface with the aid of a brush.

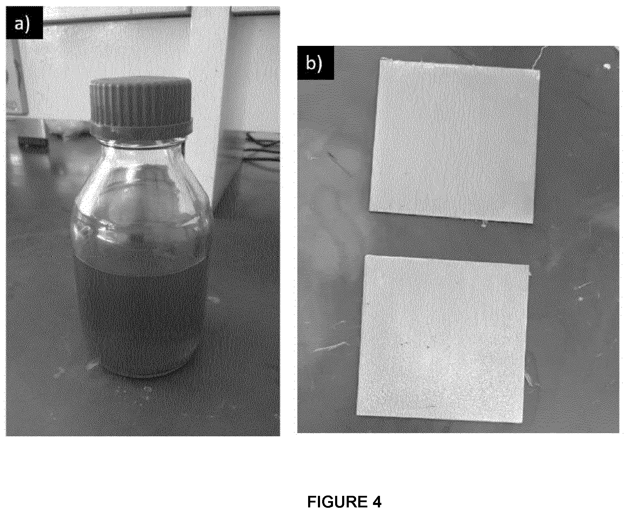

Figure 4A shows the PET solution with a composition of 20% (m/m) PET, 50% (v/v) TFA and 50% (v/v) DCM. Figure 4B shows the PET solution applied to a stainless steel surface using a brush.

The solid application consists of producing the PET adhesive and applying it directly to metal substrates, following the steps of the method described in the present invention for producing the PET film with the addition of the acrylic glue layer followed by the application of the silicone paper liner to protect the adhesive.

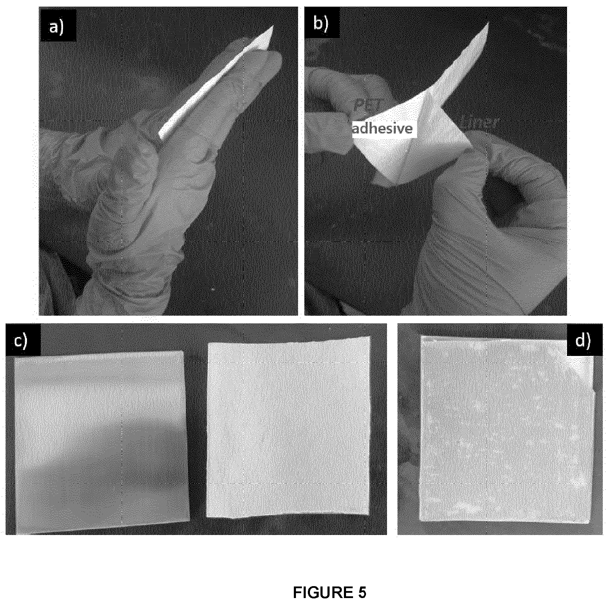

The liner is a material commonly found on the market for use in adhesives. Figure 5 shows the PET-based adhesive before application (Figure 5A) and after the liner has been removed (Figure 5B). Figure 5C shows the steel substrate before the film is applied to its surface and Figure 5D after the adhesive has been applied to its surface.

Those skilled in the art will appreciate the knowledge being shown and will be able to reproduce the invention in the indicated embodiments and in other variants, covered by the scope of the attached claims.

## Claims

1. PROCESS FOR PRODUCING A REPAIR ADHESIVE **characterized by** having the following steps:
I. sanitizing the recycled thermoplastic material with water, soap and a sodium hypochlorite disinfectant solution at a concentration between 0.1% and 2.5%;
II. cutting said recycled thermoplastic material into flakes with dimensions that can vary from 0.5 cm X 0.5 cm to 3.0 cm x 3.0 cm each;
III. dissolving the flakes in a proportion of 15% to 35% (m/v), in a solution containing a strong carboxylic acid and an organic solvent in the range of 5/95 (% v/v) to 95/5 (% v/v) of acid/solvent to produce a film, wherein the proportion between the thermoplastic material and the strong carboxylic acid solution and solvent can vary from 10/90 (m/v%) to 40/60 (m/v%);
IV. stirring the solution obtained in (iv) until the material dissolves at room temperature;
V. adding a plasticizer slowly, in concentrations ranging from 10 to 50% (v/v);
VI. dissolving all the plasticizer until a mixture is formed;
VII. submitting the mixture to an ultrasonic bath for a period of 5 to 15 minutes;
VIII. depositing the mixture from (vii) on a glass plate and keep this system for a period of between 30 and 90 minutes at rest in atmospheric air;
IX. waiting for the partial precipitation of the thermoplastic material;
X. performing the phase inversion technique by submerging the glass plate in a non-solvent bath of distilled water; and,
XI. applying a layer of glue with permanent tack using an extender and protecting it with a silicone-treated paper liner.

2. PRODUCTION PROCESS, according to claim 1, **characterized in that** in step (I) the thermoplastic material is selected from the group consisting of poly(propylene), poly(ethylene), poly(vinyl chloride), poly(urethanes), poly(styrene), poly(ethylene vinyl acetate) and poly(methyl methacrylate), preferably poly(ethylene terephthalate).

3. PRODUCTION PROCESS, according to claim 1, **characterized in that** step (III) can be carried out in different proportions of the strong carboxylic acid, the organic solvent and the thermoplastic material.

4. PRODUCTION PROCESS, according to claim 3, **characterized in that** the strong carboxylic acid used can be selected from the group consisting of trifluoroacetic acid, trichloroacetic acid and 1,1,1,3,3,3-hexafluoro-2-propanol (HIFP).

5. PRODUCTION PROCESS, according to claim 3, **characterized in that** the organic solvent used can be selected from the group consisting of acetone, dichloromethane, toluene, xylene, phenol and carbon tetrachloride.

6. PRODUCTION PROCESS, according to claim 4 or 5, **characterized in that** trifluoroacetic acid (TFA) and dichloromethane (DCM) are preferably used.

7. PRODUCTION PROCESS, according to claim 1, **characterized in that** in step (V) different classes of plasticizers can be used and selected from the group consisting of:
- adipic acid derivatives (di-n-hexyl adipate (DHA), heptyl nonyl adipate (79A), di-2-ethylhexyl adipate (DOA), diisodecyl adipate (DIDA), diisononyl adipate (DINA);
- azelaic acid derivative (di-2-ethylhexyl azelate (DOZ);
- benzoic acid derivatives (dithiene glycol dibenzoate, dipropylene glycol dibenzoate, 2,2,4-trimethyl-1,3-pentanediolisobutyrate benzoate);
- citric acid derivatives (tri-n-butyl citrate, acetyl tri-n-butyl citrate);
- epoxy derivatives (epoxidized soybean oil (ESO), epoxidized linseed oil (ELO), 2-ethylhexyl epoxy thalate);
- glycol derivatives (diethylene glycol dipellargonate, triethylene glycol di-2-di-2-methylbutyrate);
- hydrocarbons (hydrogenated terphenyls, chlorinated paraffin (52% by weight CI);
- softallic acid derivatives (di-2-ethylhexyl isophthalate);
- oleic acid derivatives (butyl oleate);
- phosphoric acid derivatives (tri-2-ethylhexyl phosphate (TOP), triphenyl phosphate (TPP), tricresyl phosphate (TCP), 2-ethylhexyl diphenyl phosphate, isodecyl diphenyl phosphate);
- phthalic acid derivatives (dimethyl phthalate (DMP), diethyl phthalate (DEP), dibutyl phthalate (DBP), butyl octyl phthalate (BOP), diisohexyl phthalate (DHP), diisoheptyl (DIHP), heptyl nonyl phthalate (79P), heptyl nonyl undecyl phthalate (711P), dlysooctyl phthalate (DIOP), dl-2-ethylhexyl phthalate (DOP), (n-hexyl, octyl, decyl) phthalate (610), (n-octyl, decyl) phthalate (81OP), diisodecyl (DIDP), diundecyl phthalate (DUP), dltridecyl phthalate (DTDP), butyl benzyl phthalate (BBP), alkyl benzyl phthalate, santicizer^{®}261);
- ricinoleic acid derivatives (methyl ricinoleate, n-butyl acetylricinoleate, castor oil);
- sebacic acid derivatives (di-2-ethylhexyl sebacate (DOS));
- stearic acid derivatives (n-butyl stearate);
- sucrose derivatives (sucrose acetate isobutyrate (SAIB));
- sulfonic acid derivatives ((o,p)-toluenesulfonamide, N-ethyl-(o,p)-toluenesulfonamide, phenol alkylsulfonic acid ester and creosol (Mesamoll^{®}));
- terephthalic acid derivatives (bis(2-ethylhexyl) terephthalate (DOTP);
- trimellitic acid derivatives (tris(2-ethylhexyl) trimelllate (TOTM), heptyl nonyl trimelllate (79TM), triisononyl trimelllate (TINTM));
- polyesters such as: adipic acid polyester (mol wt 6000), Paraplex^{®}G-40, adipic acid polyester (mol wt 2000), Santiclzer^{®}334F, azeiaic acid polyester (mol wt 2200), Platolein^{©}9720, sebacic acid polyester (mol wt 8000), Paraplex^{®}G-25); and,
- terpenes and derivatives (camphor, hydrogenated rosin methyl ester).

8. PRODUCTION PROCESS, according to claim 7, **characterized in that** dibutyl phthalate is preferably used.

9. PRODUCTION PROCESS, according to claim 8, **characterized in that** the glue is applied with the aid of a Bird-type extender.

10. REPAIR ADHESIVE, obtained by the process as defined in any one of claims 1 to 9, **characterized by** being ductile and flexible, has low permeability to water and gases and shows chemical resistance and thermal stability up to 150 °C.

11. REPAIR ADHESIVE, according to claim 10, **characterized by** being waterproof and provides effective insulation.

12. REPAIR ADHESIVE, according to claim 11 or 11, **characterized by** having a minimum durability of 2 years.

13. USE OF A REPAIR ADHESIVE, as defined in any one of claims 10 to 12, **characterized by** being used as an anti-corrosive repair to be applied to any metal surface, whether painted or not, in onshore and offshore areas.

14. USE, according to claim 13, **characterized in that** the application occurs in liquid form, as a spray, or in solid form in the form of adhesive tape.

15. USE, according to claim 14, **characterized in that**, for application in liquid form, the solution of dissolved thermoplastic material, preferably PET, is deposited by spraying or with the aid of a brush on the metal surface to form a polymeric film after 5 minutes.

16. USE, according to claim 15, **characterized in that** the solution consists of the direct application of the solution composed of thermoplastic material dissolved in a strong carboxylic acid and an organic solvent.

17. USE, according to claim 16, **characterized in that** the solution preferably consists of a composition of 20% (w/w) PET, 50% (v/v) TFA and 50% (v/v) DCM.

18. USE, according to any one of claims 15 to 17, **characterized by** further comprising the use of the solution as a gel that can be applied to the surface with the aid of a brush.

19. USE, according to claim 14, **characterized in that** the application in solid form consists of producing said adhesive, according to the process as defined in any one of claims 1 to 9, and applying it directly to metal substrates, with the addition of the glue layer and silicone paper liner to protect the adhesive.

20. USE, according to claim 13, **characterized in that** the adhesive can be removed manually or by abrasive blasting.

21. USE, according to claim 20, **characterized in that** the abrasive blasting can, for example, be hydroblasting or blasting with metal oxides.
